# EUROPEAN PATENT APPLICATION

(11) **EP 4 300 738 A1**
(43) Date of publication of application: **03.01.2024**
(21) Application number: 21927590.6
(22) Date of filing: 02.11.2021
(51) Int. Cl.: H02G 3/22, F16L 5/02

(54) **WIRE HARNESS FIXING STRUCTURE AND ELECTRIC APPLIANCE BOX BODY**

(30) Priority: 26.02.2021 CN 202120427153 U
(71) Applicant: Qingdao Haier Air Conditioner General Corp., Ltd., Qingdao, Shandong 266101 (CN); Haier Smart Home Co., Ltd., Qingdao, Shandong 266101 (CN)
(72) Inventor: MA, Zhenhao, Qingdao, Shandong 266101 (CN); SUN, Dongsong, Qingdao, Shandong 266101 (CN); YUAN, Shanshan, Qingdao, Shandong 266101 (CN); ZHAO, Zhilin, Qingdao, Shandong 266101 (CN); CHENG, Jie, Qingdao, Shandong 266101 (CN); LI, Yongde, Qingdao, Shandong 266101 (CN)
(74) Representative: dompatent von Kreisler Selting Werner - Partnerschaft von Patent- und Rechtsanwälten mbB
(86) International application number: PCT/CN2021/128115
(87) International publication number: WO 2022/179166

(57) **Abstract**

The present disclosure provides a wire harness fixing arrangement, wherein the wire harness is configured to penetrate through a wire entry on a box body, including a fixing ring, wherein an interior of the fixing ring is provided with a wire harness hole penetrating along an axial direction, a middle of an outer wall of the fixing ring is provided with a circular clamping groove along the axial direction, the clamping groove are configured to be matched and inserted with a peripheral edge of the wire entry, an inner wall of the wire entry is provided with a positioning block, and a bottom of the clamping groove is provided with a positioning slot corresponding to the positioning block. The present disclosure discloses a wire harness fixing arrangement and an electrical box body therefor, wherein the fixing ring is disposed between the wire harness and the wire entry, which can realize the fixing and sealing of the wire harness at the wire entry and realize the orderly and stable placement of the wire harness. And the fixing ring is sheathed on the wire harness, which can play an anti-wear protection role on the wire harness. In addition, the fixing ring is matched and connected with the wire entry through the clamping groove and the positioning slot, which can improve the fixing stability of the fixing ring. The fixing ring is configured to fasten the wire harness, which is simple and reliable.

## Description

### CROSS REFERENCE OF RELATED APPLICATION

This application claims priority to Chinese Patent Application No. CN202120427153.X, filed on February 26, 2021, entitled "Wire Harness Fixing Structure and Electric Appliance Box Body", the contents of which is incorporated herein by reference in its entirety.

### FIELD OF THE INVENTION

The present disclosure relates to the technical field of the electrical control box, and more particular to a wire harness fixing arrangement and an electrical box body therefor.

### BACKGROUND OF THE INVENTION

Wire harness refers to a component in which contact terminals punched by copper are crimped with wires and cables, then are molded with insulators or covered with metal shells on the outside, and are formed to be bonded to connect circuits. The wire harnesses of the computer board of the outdoor machine of most of the air conditioner are fixed by the claw of the electrical box body or by wire ties.

With the claw of the electrical box fixing the wire harness, it is mostly unstable, which leads to the tangled mess of wires and no distinction between high current and light current after severing a long time. Because of the limited operation space with the wire ties, it is difficult to fix the wire harness in subsequent operations, and there is a risk of wrong cutting wires when cutting redundant wire ties. In addition, whether a claw or a wire tie, it will cause a certain amount of wear to the wire harness.

### SUMMARY OF THE INVENTION

The present disclosure provides a wire harness fixing arrangement and an electrical box body therefor, which solves the problems of insecure wire harness fixing, messy wire harness, and easily worn of the wire harness in the conventional electrical box body.

The present disclosure provides a wire harness fixing arrangement, wherein the wire harness is configured to penetrate through a wire entry on a box body, including a fixing ring, wherein an interior of the fixing ring is provided with a wire harness hole penetrating along an axial direction, a middle of an outer wall of the fixing ring is provided with a circular clamping groove along the axial direction, the clamping groove are configured to be matched and inserted with a peripheral edge of the wire entry, an inner wall of the wire entry is provided with a positioning block, and a bottom of the clamping groove is provided with a positioning slot corresponding to the positioning block.

According to the wire harness fixing arrangement provided by the present disclosure, two end portions of the fixing ring located along the axial direction on two sides of the clamping groove are respectively in tapered structure, and the cross-sectional size of one part of the end portion near an end face is smaller than the cross-sectional size of another part of the end portion near the clamping groove.

According to the wire harness fixing arrangement provided by the present disclosure, the fixing ring is provided with guiding slots located along the axial direction on two sides of the clamping groove on the end portions and corresponded to the positioning slot.

According to the wire harness fixing arrangement provided by the present disclosure, the fixing ring is divided into two parts along the circumferential direction, and the two parts of the fixing ring are spliced and connected.

According to the wire harness fixing arrangement provided by the present disclosure, a mounting post and a mounting hole are matched and provided on the two parts of the fixing ring.

According to the wire harness fixing arrangement provided by the present disclosure, the mounting post is disposed on one side of the wire harness hole on the splicing surface of one part of the fixing ring, and the mounting hole is staggered and disposed on the other side of the wire harness hole.

According to the wire harness fixing arrangement provided by the present disclosure, a perforative wire harness frame is disposed on the box body, an opening-closing plate is matched and disposed at the wire harness frame, a first side of the opening-closing plate is rotatably connected with a first side of the wire harness frame, and the wire entry is constructed between a second side of the opening-closing plate and a second side of the wire harness frame.

According to the wire harness fixing arrangement provided by the present disclosure, the first side of the opening-closing plate is integrally connected with the first side of the wire harness frame, and the first side of the opening-closing plate is provided with a thinning region.

According to the wire harness fixing arrangement provided by the present disclosure, the thinning region is provided with a serrated structure.

The present disclosure also provides an electrical box body, including the wire harness fixing arrangement disclosed above.

The present disclosure discloses a wire harness fixing arrangement and an electrical box body therefor, wherein the fixing ring is disposed between the wire harness and the wire entry, which can realize the fixing and sealing of the wire harness at the wire entry and realize the orderly and stable placement of the wire harness. And the fixing ring is sheathed on the wire harness, which can play an anti-wear protection role on the wire harness. In addition, the fixing ring is matched and connected with the wire entry through the clamping groove and the positioning slot, which can improve the fixing stability of the fixing ring. The fixing ring is used to fasten the wire harness, which is simple and reliable.

### BRIEF DESCRIPTION OF THE DRAWINGS

In order to more clearly explain the embodiment of the present disclosure or the technical solution in the prior art, while a brief description will be given below of the drawings required in embodiments or the prior art, it will be apparent that the drawings in the following description are some of the embodiments of the present disclosure from which other drawings may be obtained without creative effort by one skilled in ordinary art.
Fig. 1 is a schematic view of a wire harness fixing arrangement provided by the present disclosure.
Fig. 2 is a schematic view of the fixing ring provided by the present disclosure.
Fig. 3 is a schematic view of the fixing ring provided by the present disclosure.
Fig. 4 is an exploded view of the fixing ring provided by the present disclosure.
Fig. 5 is a view of a splicing surface of one part of the fixing ring provided by the present disclosure.
Fig. 6 is a schematic view of the fixing ring connected with the wire harness provided by the present disclosure.
Fig. 7 is a partial perspective schematic view of the fixing ring connected with the wire harness provided in the present disclosure.
Fig. 8 is a schematic view of the wire harness passing through the box body provided in the present disclosure.
Fig. 9 is a schematic view of the box body provided by the present disclosure.
Fig. 10 is a schematic view of the box body provided by the present disclosure.
Fig. 11 is an enlarged partial view of area A of Fig. 10 provided by the present disclosure.
Fig. 12 is a schematic view of the opening-closing plate in a closed state at the box body provided in the present disclosure.

### REFERENCES IN THE DRAWINGS:

11. box body; 111. wire entry; 112. wire harness frame; 113. opening-closing plate; 1131. thinning region; 1132. serrated structure; 2. fixing ring; 21. clamping groove; 22. end portion; 23. wire harness hole; 24. positioning slot; 25. guiding slot; 26. mounting hole; 27. mounting post; 3. wire harness.

### DETAILED DESCRIPTION OF THE EMBODIMENTS

In order to clearly disclose the object, technical proposal, and advantages of the present disclosure, the technical proposal of the present disclosure will be clearly and completely described in conjunction with the accompanying drawings, and it will be apparent that the described embodiments are part of, not all of, the embodiments of the present disclosure. Based on the embodiments in the present disclosure, all other embodiments obtained by those of ordinary skill in the art without making creative efforts fall within the protection scope of the present disclosure.

Embodiments of the present disclosure are described in the following examples which are shown in the drawings in which identical or similar reference numerals throughout refer to identical or similar elements or elements having identical or similar functions. The embodiments described below by reference to the accompanying drawings are exemplary and are intended to be used for explanation of the present disclosure and are not to be construed as a limitation.

The following disclosure provides many different embodiments or examples for implementing different constructions of the present disclosure. In order to simplify the present disclosure, elements and arrangements of specific embodiments are described below. Of course, they are only by way of example and are not intended to limit the present disclosure. In addition, the present disclosure may repeat reference numbers and/or letters in different embodiments. Such repetition is for purposes of simplicity and clarity and does not in itself indicate a relationship between the various embodiments and/or arrangements. Further examples of various specific processes and materials are provided, but those of ordinary skill in the art will be aware of the applicability of other processes and/or other materials.

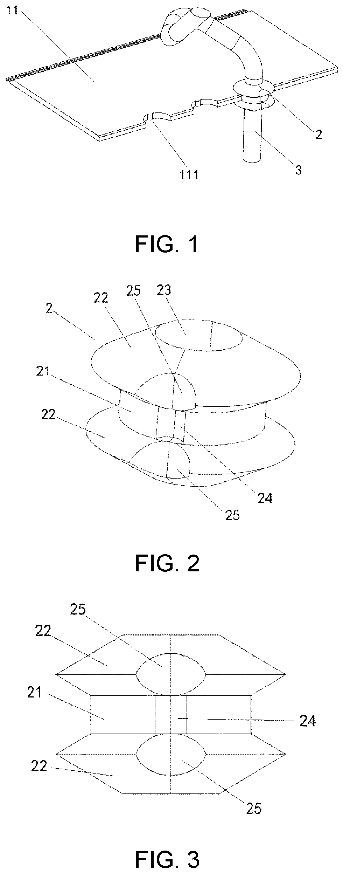

The wire harness fixing arrangement and electrical box body of the present disclosure are described below with reference to Figs. 1-12.

With reference to Fig. 1, the present embodiment provides a wire harness fixing arrangement, wherein a wire harness 3 is capable of passing through a wire entry on a box body 11 and the wire harness fixing arrangement includes a fixing ring 2. The fixing ring 2 is sheathed on the wire harness 3. The fixing ring 2 is provided between the wire harness 3 and the wire entry 111, and serves as a fixing and sealing function of the wire harness 3 at the wire entry 111. With reference to Fig. 2, an interior of the fixing ring 2 is provided with a wire harness hole 23 penetrating along an axial direction. The wire harness 3 passes through the wire harness hole 23. A middle of an outer wall of the fixing ring 2 along the axial direction is provided with a circular clamping groove 21, and the clamping groove 21 is configured to be matched and inserted with a peripheral edge of the wire entry. That is, the outer wall surface of the fixing ring 2 is provided with a groove section with a small cross-sectional size at the middle part along the axial direction. The clamping groove 21 is formed in the middle of the outer wall surface of the fixing ring 2, The peripheral edge of the wire entry can be inserted into the clamping groove 21 on the outer wall of the fixing ring 2, and two end portions 22 of the fixing ring 2 are snapped on two sides of the peripheral edge of the wire entry 111, so as to fix the fixing ring 2 at the wire entry 111 for avoiding falling off.

With reference to Figs. 1 and 2, an inner wall of the wire entry is provided with a positioning block, and a bottom of the clamping groove 21 is provided with a positioning slot 24 corresponding to the positioning block. When the fixing ring 2 is mounted, the inner wall of the wire entry 111 is in contact with the bottom of the clamping groove 21 on the fixing ring 2. The positioning block on the inner wall of the wire entry 111 is correspondingly inserted into the positioning slot 24 on the clamping groove 21 of the fixing ring 2. The fastening of the fixing ring 2 can be well realized, thereby realizing well fastening of the wire harness.

The present disclosure discloses a wire harness fixing arrangement, wherein the fixing ring 2 is disposed between the wire harness and the wire entry 111, which can realize the fixing and sealing of the wire harness at the wire entry 111 and realize the orderly and stable placement of the wire harness. And the fixing ring 2 is sheathed on the wire harness, which can play an anti-wear protection role on the wire harness. In addition, the fixing ring 2 is matched and connected with the wire entry 111, which can improve the fixing stability of the fixing ring 2. The fixing ring 2 is configured to fasten the wire harness, which is simple and reliable.

Further, two positioning blocks are disposed on opposite sides of the inner wall of the wire entry, and two positioning slots 24 are correspondingly disposed on the bottom of the clamping groove 21 of the fixing ring 2, so as to further improve the security and stability of the fitness between the fixing ring 2 and the wire entry 111.

Further, the outer diameter of the middle clamping groove 21 of the fixing ring 2 may be slightly larger than the inner diameter of the wire entry 111, so that the wire entry 111 and the clamping groove 21 of the fixing ring 2 are interference fitted, so as to improve the stability and security of the fixing ring 2.

Further with reference to Figs. 2 and 3 on the basis of the above embodiment, the two end portions 22 of the fixing ring 2 located along the axial direction on two sides of the clamping groove 21 are respectively in tapered structure, and the cross-sectional size of the end portion 22 near the end face is smaller than the cross-sectional size of the end portion 22 near the clamping groove 21. The fixing ring 2 is divided into the end portions 22 at two ends and the clamping groove 21 in the middle along the axial direction. The cross-sectional size of the end portion 22 is larger than the cross-sectional size of the clamping groove 21. The end portion 22 is provided in a tapered structure, and the cross-sectional size of the end portion 22 near the end face is small, so that it is conducive to the mounting of the fixing ring 2.

Further, in another embodiment, the end portions 22 of the fixing ring 2 located along the axial direction on two sides of the clamping groove 21 can also have a flying saucer-shaped structure. That is, the cross-sectional size of the end portions 22 gradually increases from the end face side to the clamping groove 21 side, and then gradually decreases, as shown in Fig. 3. In other embodiments, the shape of the end portion 22 may be in other structure, and the cross-sectional size of the end portion 22 near the end face is smaller than the cross-sectional size near the clamping groove 21 to facilitate mounting at the wire entry 111, which are not specifically limited.

Further with reference to Figs. 2 and 3 on the basis of the above embodiment, the fixing ring 2 is provided with the guiding slots 25 located along the axial direction on two sides of the clamping groove 21 on the end portions 22 and corresponded to the positioning slot 24. The guiding slot 25 at the end portion 22 corresponds in the axial direction to the positioning slot 24 in the clamping groove 21, so that when the fixing ring 2 is mounted, the positioning hole in the inner wall of the wire entry 111 is facilitated to slide into the positioning slot 24 along the guiding slot 25.

Further with reference to Figs. 2 and 3, the cross-sectional size of the fixing ring 2 at the positioning slot 24 is smaller than the cross-sectional size of the fixing ring 2 at the guiding slot 25. That is, the positioning slot 24 is concave with respect to the guiding slot 25, so that when the positioning block is inserted into the positioning slot 24, the positioning block will not easily slide into the guiding slot 25, thereby improving the stability and security of the fixing ring 2.

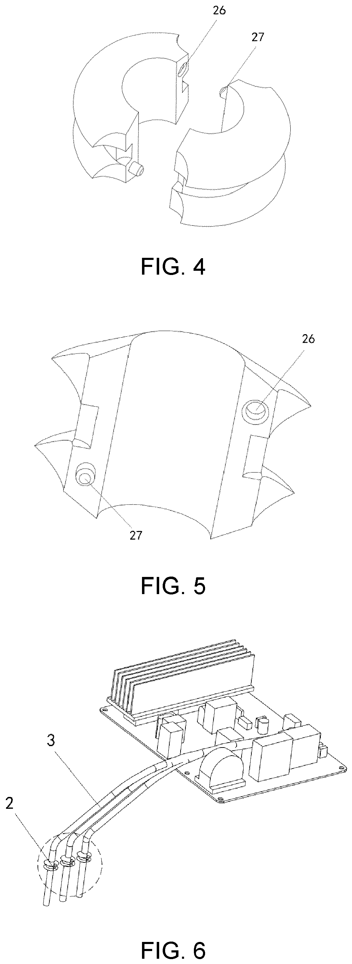

Further with reference to Fig. 4 on the basis of the above embodiment, the fixing ring 2 is divided into two parts along the circumferential direction and the two parts of the fixing ring 2 are spliced and connected. The fixing ring 2 is defined by two splicing and connecting parts along the circumferential direction, which is conducive to the mounting of the fixing ring 2 and the wire harness 3.

Preferably, the fixing ring 2 in the embodiment can be symmetrically divided into two parts. The inner walls of the two parts of the fixing ring 2 respectively are in a semicircular structure, so that the inner walls of the two parts of the fixing ring 2 are spliced together to form a wire harness hole 23. Further, the fixing ring 2 may be divided into three parts or another number in the circumferential direction to be spliced, so that the fixing ring 2 can be formed by splicing and the fixing ring 2 can be conveniently mounted with the wire harness 3, which are not specifically limited.

Further with reference to Fig. 4 on the basis of the above embodiment, a mounting post 27 and a mounting hole 26 are matched and provided on the two parts of the fixing ring 2. That is to say, the mounting post 27 is provided on the splicing surface of one part of the fixing ring 2, and the mounting hole 26 is provided on the corresponding position of the splicing surface of the other part. Thus, when the two parts of the fixing ring 2 are spliced, the mounting post 27 is inserted correspondingly into the mounting hole 26 to realize the connection of the two parts.

Further, the mounting post 27 and the mounting hole 26 can be connected in interference fitness. That is, the outer diameter size of the mounting post 27 can be slightly larger than the inner diameter size of the mounting hole 26, thus improving the security of the splicing connection between the two parts of the fixing ring 2.

Further with reference to Fig. 5 on the basis of the above embodiment, the mounting post 27 is provided on one side of the wire harness hole 23 on the splicing surface of one part of the fixing ring 2, and the mounting hole 26 is staggered and disposed on the other side of the wire harness hole 23. That is, the mounting post 27 on one side of the splicing surface and the mounting hole 26 on the other side of the part of the fixing ring 2 are staggered in the axial direction. That is to say, the mounting post 27 and the mounting hole 26 are provided on the splicing surface of any one part of the fixing ring 2, and the mounting post 27 and the mounting hole 26 are distributed on two sides and staggered from top to bottom. And the matching mounting hole 26 and the mounting post 27 are also provided on the splicing surface of the other part of the fixing ring 2.

The distribution of the mounting post 27 and the mounting holes 26 is advantageous to improving the secureness of the splicing connection between the two parts of the fixing ring 2. Further, the specific number and distribution of the mounting post 27 and the mounting hole 26 on the splicing surface of any one part of the fixing ring 2 can be flexibly designed so that the fixing ring 2 can be formed by securely splicing, which is not specifically limited.

Further with reference to Fig. 6, Fig. 7, and Fig. 8, a plurality of wire harnesses are connected to a plurality of fixing ring 2 in one-to-one correspondence and a plurality of wire harnesses pass through a plurality of wire entry 111 in one-to-one correspondence so that orderly fixing of wire harnesses can be realized.

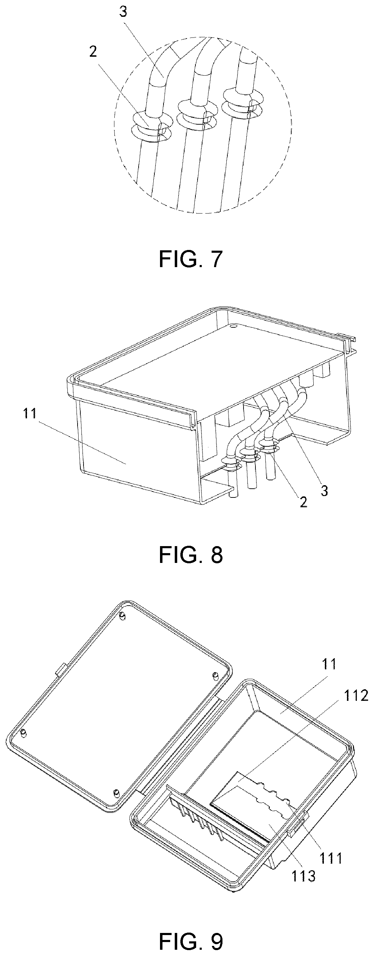

Further with reference to Fig. 9 on the basis of the above embodiment, the box body 11 is provided with a perforative wire harness frame 112. The wire harness frame 112 has an opening structure penetrating through the box body 11. An opening-closing plate 113 is matched and provided at the wire harness frame 112. The size and shape of the opening-closing plate 113 are matched with the wire harness frame 112, and the wire harness frame 112 of the box body 11 is enclosed when the opening-closing plate 113 is in a closed state. A first side of the opening-closing plate 113 is rotatably connected with the first side of the wire harness frame 112. The wire entry is formed between a second side of the opening-closing plate 113 and a second side of the wire harness frame 112.

Specifically, a first half-bounding hole is provided on the second side of the wire harness frame 112, a second half-bounding hole is correspondingly provided on the second side of the opening-closing plate 113, the first half-bounding hole and the second half-bounding hole are spliced to form the wire entry. That is, the second side of the opening-closing plate 113 and the second side of the wire harness frame 112 can be spliced to form the wire entry. The opening and closing of the wire harness frame 112 can be realized by rotating the opening-closing plate 113. Further with reference to Fig. 1, the arc angle of the first half-bounding hole on the second side of the wire harness frame 112 may be greater than 180 deg. That is the angle of the first half-bounding hole is greater than a semicircle aperture. When the fixing ring 2 is mounted, the fixing ring 2 can be first mounted at the first half-bounding hole, and then the opening-closing plate 113 is rotated to close to complete the mounting. The angle of the first half-bounding hole is larger than a semicircle aperture, so that the security and stability of the cooperation between the fixing ring 2 and the first semi-surrounding hole can be improved, the risk of the fixing ring 2 falling off during mounting can be reduced, which is conducive to mounting.

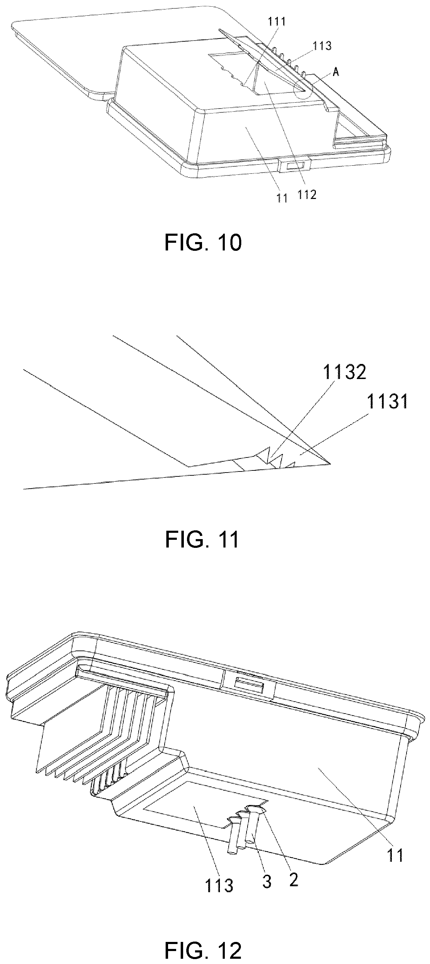

With reference to Fig. 10, the opening-closing plate 113 can be opened, in a case where the wire entry 111 has a half-bounding structure, so that the passing of the wire harness 3 and the mounting of the fixing ring 2 can be facilitated. When the opening-closing plate 113 is opened, the wire harness 3 can be passed and the fixing ring 2 can be mounted, the fixing ring 2 is spliced and sheathed on the wire harness 3, and the positioning slot 24 and the clamping groove 21 on the fixing ring 2 can be matched and inserted with the peripheral edge of the wire entry 111 on the second side of the wire harness frame 112. Then, the opening-closing plate 113 is rotated, so that the peripheral edge of the wire entry 111 on the second side of the opening-closing plate 113 passes through the end portion 22 of the fixing ring 2, the positioning block on the peripheral edge of the wire entry 111 on the second side of the opening-closing plate 113 is correspondingly inserted into the positioning slot 24 of the fixing ring 2, and the opening-closing plate 113 is closed to complete the mounting of the wire harness, as shown in Fig. 12.

Further with reference to Fig. 11 on the basis of the above embodiment, the first side of the opening-closing plate 113 is integrally connected with the first side of the wire harness frame 112, and the first side of the opening-closing plate 113 is provided with a thinning region 1131.

Further with reference to Fig. 11 on the basis of the above embodiment, the thinning region 1131 is provided with a serrated structure 1132. The rotation of the opening-closing plate 113 can be facilitated, which is beneficial to prolong the service life of the arrangement.

Further on the basis of the above embodiment, the wire entry 111 in the present embodiment may be an opening directly provided in the box body 11. This arrangement does not need to include the opening-closing plate, that is, the opening-closing plate and the wire harness frame are integrated and connected, and only the wire entry and the positioning block are provided. The tapered end of the end portion of the fixing ring 2 can be squeezed into the wire entry 111 for mounting. Further, on the basis of the above embodiment, the present embodiment provides an electrical box body 11 which includes the wire harness fixing arrangement described in any of the above-mentioned embodiments.

On the basis of the above embodiment, the present embodiment further provides a fixing arrangement of the computer board wire harness in the electrical box body 11, which mainly solves the problems of insecure wire harness fixing, messy wire harness, and easily worn of the wire harness in the electrical box body 11 of the outdoor machine of the air conditioner. The fixing arrangement of the wire harness mainly provides a fixing ring 2 between the wire harness and the wire entry 111. As shown in Fig. 4, the wire harness fixing ring 2 has a symmetrical split structure and is formed by a pair of half-fixing rings 2. The whole arrangement is symmetrical from top to bottom and left to right, and is made of soft plastics, such as rubber, which has good elastic deformation and sealing performance. The left half-fixing ring 2 is identical to the right half-fixing ring 2, which is connected to form one wire harness fixing ring 2.

As shown in Fig. 5, one half-fixing ring 2 is illustrated as an example. The middle is hollow for wire routing, the upper and lower ends are in a tapered shape, and the middle is in a cylindrical shape. A mounting post 27 is provided in the lower left corner of the mating surface of the fixing ring 2, and a mounting hole 26 is provided in the upper right corner. A pair of half-fixing rings 2 form a wire harness fixing ring 2 by interference connection of the mounting post 27 and the mounting hole 26.

As shown in Fig. 8, an intermediate wire harness hole 23 of the wire harness fixing ring 2 is configured to route wires, the diameter of the wire harness hole 23 is slightly smaller than the diameter of the wires, the wires are fixed and sealed by elastic deformation. After the wire harness fixing ring 2 holds the wires tightly, the fixing ring 2 is mounted on the wire entry 111 of the box body 11 through the positioning slot 24 and matched with the positioning block on the wire entry 111. With reference to Fig. 1, the first half-bounding hole on the second side of the wire harness frame 112 of the box body 11 is in a circular shape, a notch is provided, and the notch can not be larger than a semicircle, so as to be securely fixed. When mounting, firstly mount the wire harness fixing ring 2 to the wire harness 3, as shown in Fig. 6. Then fasten the fixing ring 2 to the hole of the wire harness fixing ring 2 of the electrical box body 11, as shown in Fig. 8. Then rotate the opening-closing plate 113 to be closed, as shown in Fig. 12, to complete mounting.

According to the fixing manner of the computer board wire harness provided by the embodiment, the wire harness fixing ring 2 is designed as a split structure. The fixing ring 2 is adopted to fasten the wire harness, the fixing manner is simple and firm, and the rubber soft plastic can protect the wire harness against wear to a certain extent.

In the description of the present disclosure, it should be understood that the terms "up", "down", "front", "back" and the like denote orientations or positional relationships based on those shown in the drawings and are intended for ease of description and simplification of the description only, and are not intended to indicate or imply that the device or element must have a particular orientation, be constructed and operate in a particular orientation and therefore cannot be construed as limiting to the present disclosure.

Furthermore, the terms "first" and "second" are used for descriptive purposes only and cannot be understood as indicating or implying relative importance or implying the number of technical features indicated. Thus, an element defined as "first" or "second" may explicitly or implicitly include one or more of such elements. In the description of the present disclosure, "a plurality" means two or more unless expressly specified otherwise.

Finally, it should be noted that the above embodiments are only used to illustrate the technical scheme of the present disclosure, not to limit it. Although the present disclosure has been described in detail with reference to the foregoing embodiments, it should be understood by those of ordinary skill in the art that the technical scheme described in the foregoing embodiments can still be modified or some technical features thereof can be equivalently replaced. These modifications or equivalents do not depart the essence of the corresponding technical proposal from the spirit and scope of the technical scheme of the embodiments of the present disclosure.

## Claims

1. A wire harness fixing arrangement, wherein the wire harness is configured to penetrate through a wire entry on a box body, comprising: a fixing ring, wherein an interior of the fixing ring is provided with a wire harness hole penetrating along an axial direction, a middle of an outer wall of the fixing ring is provided with a circular clamping groove along the axial direction, the clamping groove is configured to be matched and inserted with a peripheral edge of the wire entry, an inner wall of the wire entry is provided with a positioning block, and a bottom of the clamping groove is provided with a positioning slot corresponding to the positioning block.

2. The wire harness fixing arrangement according to claim 1, wherein two end portions of the fixing ring located along the axial direction on two sides of the clamping groove are respectively in tapered structure, and the cross-sectional size of one part of the end portion near an end face is smaller than the cross-sectional size of another part of the end portion near the clamping groove.

3. The wire harness fixing arrangement according to claim 1, wherein the fixing ring is provided with guiding slots located along the axial direction on two sides of the clamping groove on the end portions and corresponded to the positioning slot.

4. The wire harness fixing arrangement according to any one of claims 1 to 3, wherein the fixing ring is divided into two parts in the circumferential direction, and the two parts of the fixing ring are spliced and connected.

5. The wire harness fixing arrangement according to claim 4, wherein a matching mounting post and a mounting hole are arranged between the two parts of the fixing ring.

6. The wire harness fixing arrangement according to claim 5, wherein the mounting post is disposed on one side of the wire harness hole on the splicing surface of one part of the fixing ring, and the mounting hole is staggered and disposed on the other side of the wire harness hole.

7. The wire harness fixing arrangement according to any one of claims 1 to 3, wherein a perforative wire harness frame is disposed on the box body, an opening-closing plate is matched and disposed at the wire harness frame, a first side of the opening-closing plate is rotatably connected with a first side of the wire harness frame, and the wire entry is constructed between a second side of the opening-closing plate and a second side of the wire harness frame.

8. The wire harness fixing arrangement according to claim 7, wherein the first side of the opening-closing plate is integrally connected with the first side of the wire harness frame, and the first side of the opening-closing plate is provided with a thinning region.

9. The wire harness fixing arrangement according to claim 8, wherein the thinning region is provided with a serrated structure.

10. An electrical box body, comprising: the wire harness fixing arrangement according to any one of claims 1 to 9.
